# EUROPEAN PATENT APPLICATION

(11) **EP 4 836 161 A1**
(43) Date of publication of application: **04.11.2026**
(21) Application number: 25736407.5
(22) Date of filing: 03.01.2025
(51) Int. Cl.: H01M 50/449, H01M 50/409

(54) **SEPARATOR, PREPARATION METHOD THEREFOR, BATTERY AND ELECTRICAL APPARATUS**

(30) Priority: 05.01.2024 CN 202410021261
(71) Applicant: Contemporary Amperex Technology Co., Limited, Ningde, Fujian 352100 (CN)
(72) Inventor: HONG, Haiyi, Ningde, Fujian 352100 (CN); CHENG, Xiaonan, Ningde, Fujian 352100 (CN); MA, Yanyun, Ningde, Fujian 352100 (CN); LI, Lei, Ningde, Fujian 352100 (CN); KANG, Haiyang, Ningde, Fujian 352100 (CN); CHAO, Lei, Ningde, Fujian 352100 (CN); YANG, Jianrui, Ningde, Fujian 352100 (CN); ZHENG, Yi, Ningde, Fujian 352100 (CN); SUN, Chengdong, Ningde, Fujian 352100 (CN)
(74) Representative: Lorenz Seidler Gossel Part. mbB
(86) International application number: PCT/CN2025/070567
(87) International publication number: WO 2025/146169

(57) **Abstract**

The present disclosure provides a separator, a preparation method therefor, a battery, and an electrical apparatus. The separator comprises a base film and an adhesive layer at least located on one side of the base film. The adhesive layer comprises a polymer, the loss modulus of the polymer at 10°C being 5×10⁶Pa-9×10⁸Pa.

## Description

### TECHNICAL FIELD

The present disclosure relates to the technical field of batteries, and in particular, to a separator and a preparation method therefor, a battery, and an electric device.

### BACKGROUND

In recent years, with the development of battery technology, the market demand for power batteries with high power output and rapid charging and discharging is more urgent, and higher requirements are also placed on the battery performance. Although the separator does not participate in the electrochemical reaction in the battery, the separator plays a key role in improving the structural stability of the battery, improving the kinetic performance of the battery, and the like. However, numerous problems remain to be solved in the industrial production and application of the current separator.

It should be noted that the above statements are only used to provide background information related to the present application and do not necessarily constitute the prior art.

### SUMMARY

In a first aspect of the present application, the present application provides a separator. The separator includes a base film and an adhesive layer at least located on one side of the base film. The adhesive layer includes a polymer, and a loss modulus of the polymer at 10 °C is 5 × 10⁶ Pa to 9 × 10⁸ Pa. Therefore, the separator has superior adhesive property and swelling resistance.

In some embodiments, a degree of crosslinking of the polymer is a, where a ≥ 75%. Therefore, this helps make the polymer have an appropriate loss modulus.

In some embodiments, a degree of mass swelling of the polymer at 70 °C is b, where 36% ≤ b ≤ 75%. Therefore, this helps improve the swelling resistance of the polymer.

In some embodiments, 80% ≤ a ≤ 90%, and 43% ≤ b ≤ 60%. Therefore, this helps further improve the swelling resistance of the polymer.

In some embodiments, a loss modulus of the polymer at 25 °C is 1 × 10⁶ Pa to 9 × 10⁷ Pa. Therefore, the separator has superior adhesive property at room temperature.

In some embodiments, a monomer of the polymer and derivatives of the monomer of the polymer include at least a first monomer. The structure of the first monomer is shown in formula 1: 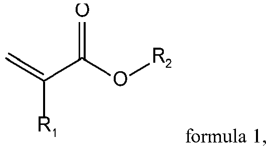 where R₁ includes a hydrogen atom or a C₁-C₄ alkyl group, and R₂ includes one of a substituted or unsubstituted C₁-C₄ alkyl group, a substituted or unsubstituted C₃-C₄ isobornyl group, a -CH₂(CH₂)ₙ₁-O-phenyl ring, and a -CH₂(CH₂)ₙ₂-O epoxy group, where a substituent of the substituted C₁-C₄ alkyl group includes a hydroxy group or a C₁-C₆ alkyl group, and n1 and n2 are each independently 1 to 3. Therefore, this helps improve the adhesive property of the polymer.

In some embodiments, the first monomer includes at least one of ethyl acrylate, n-butyl acrylate, n-propyl acrylate, isobutyl acrylate, sec-butyl acrylate, tert-butyl acrylate, cyclohexyl acrylate, isooctyl acrylate, lauryl acrylate, 2-ethylhexyl acrylate, methyl acrylate, methyl methacrylate, ethyl methacrylate, n-butyl methacrylate, 2-ethylhexyl methacrylate, isobornyl methacrylate, lauryl methacrylate, vinyl acetate, trimethylolpropane triacrylate, 2-hydroxyethyl acrylate, 2-hydroxypropyl acrylate, 2-hydroxyethyl methacrylate, 2-hydroxypropyl methacrylate, glycidyl methacrylate, and 2-phenoxyethyl acrylate. Therefore, this helps further improve the adhesive property of the polymer.

In some embodiments, the monomer of the polymer and the derivatives of the monomer of the polymer further include a second monomer. The structure of the second monomer is shown in formula 2 and/or formula 3: 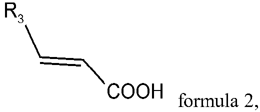 and/or, 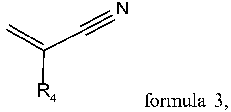 where R₃ includes a hydrogen atom or a C₁-C₈ alkyl group, and R₄ includes a hydrogen atom or a C₁-C₈ alkyl group. Therefore, the second monomer can improve the rigidity of the polymer.

In some embodiments, the second monomer includes at least one of acrylonitrile, methacrylonitrile, ethacrylonitrile, acrylic acid, methacrylic acid, crotonic acid, and heptenoic acid. Therefore, the second monomer can further improve the rigidity of the polymer.

In some embodiments, the monomer of the polymer and the derivatives of the monomer of the polymer further include a third monomer. The structure of the third monomer is shown in formula 4: 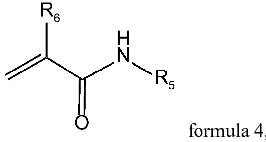 where R₅ includes a hydrogen atom, a hydroxyl-substituted C₁-C₆ alkyl group, or a C₁-C₆ alkoxy group, and R₆ includes a hydrogen atom or a C₁-C₆ alkyl group. Therefore, the third monomer can improve the adhesive property and the swelling resistance of the polymer.

In some embodiments, the third monomer includes at least one of acrylamide, N-hydroxymethyl acrylamide, and N-butoxymethylacrylamide. Therefore, the third monomer can further improve the adhesive property and the swelling resistance of the polymer.

In some embodiments, the base film includes at least one of polyethylene, polypropylene, polyvinylidene fluoride, polytetrafluoroethylene, polyethylene terephthalate, polybutylene terephthalate, polyacetal, polyamide, polycarbonate, polyimide, polyetheretherketone, polyaryletherketone, polyetherimide, polyamideimide, polybenzimidazole, polyether sulfone, polyphenylene oxide, cycloolefin copolymer, polyphenylene sulfide, and polyethylene naphthalene. Therefore, this helps improve the adhesive force of the polymer to the base film.

In a second aspect of the present application, the present application provides a method for preparing the above separator, in which the polymer is disposed on at least one side of the base film to form the adhesive layer, so as to obtain the separator. Therefore, the above separator can be prepared by a simple method.

In some embodiments, providing the polymer includes: blending and stirring constituent monomers of the polymer, an emulsifier, and an initiator in a molar ratio of 100:(2-10):(0.2-1), heating the mixture for reaction to obtain a polymer emulsion, and subjecting the polymer emulsion to spray drying to obtain the polymer. Therefore, the yield of the polymer can be improved.

In some embodiments, the constituent monomers of the polymer include the first monomer, the second monomer, and the third monomer, where a mass ratio of the first monomer to the second monomer to the third monomer is 100:(1-50):(10-40). Therefore, the adhesive property and the swelling resistance of the polymer can be improved.

In some embodiments, the loss modulus of the polymer at 10 °C is 6 × 10⁷ Pa to 1.4 × 10⁸ Pa. Therefore, the separator has superior adhesive property and swelling resistance.

In a third aspect of the present application, the present application provides a battery. The battery includes the above separator, and/or the separator obtained by using the above method. Therefore, the battery has all the features and advantages of the above separator and the method for preparing the separator, which will not be repeated herein.

In some embodiments, the battery is a lithium-ion battery, and a lithium plating window of the battery at 10 °C is 0.7C to 1.5C. Therefore, the battery has superior low-temperature cycle performance.

In a fourth aspect of the present application, the present application provides an electric device. The electric device includes the above battery. Therefore, the electric device has all the features and advantages of the above battery, which will not be repeated herein.

### BRIEF DESCRIPTION OF THE DRAWINGS

The above and/or additional aspects and advantages of the present application will become apparent and readily understood from the description of embodiments in conjunction with the drawings below, in which:
FIG. 1 is a schematic structural diagram of a separator according to one embodiment of the present application;
FIG. 2 is a schematic structural diagram of a separator according to another embodiment of the present application;
FIG. 3 is a schematic diagram of a battery cell according to one embodiment of the present application;
FIG. 4 is an exploded view of the battery cell according to one embodiment of the present application shown in FIG. 3;
FIG. 5 is a schematic diagram of a battery module according to one embodiment of the present application;
FIG. 6 is a schematic diagram of a battery pack according to one embodiment of the present application;
FIG. 7 is an exploded view of the battery pack according to one embodiment of the present application shown in FIG. 6; and
FIG. 8 is a schematic diagram of an electric device using a battery as a power source according to one embodiment of the present application.

### Description of the reference numerals:

1 battery pack; 2 upper case body; 3 lower case body; 4 battery module; 5 battery cell;
11 base film; 12 polymer; 51 housing; 52 electrode assembly; 53 top cover assembly.

### DETAILED DESCRIPTION

Embodiments of the present application are described in detail hereinafter, with examples of the embodiments illustrated in the drawings. Throughout the drawings, the same or similar reference numbers indicate the same or similar elements or elements having the same or similar functions. The embodiments described hereinafter with reference to the drawings are exemplary and are only intended to explain the present application. They should not be construed as limiting the present application.

Unless otherwise defined, all technical and scientific terms used in the present application have the same meaning as commonly understood by those skilled in the art to which the present application belongs. The terms used in the present application are only used to describe specific embodiments and are not intended to limit the present application. Unless otherwise specified, the values of the parameters mentioned in the present application can be measured by various measurement methods commonly used in the art (for example, they can be tested according to the methods given in the embodiments of the present application).

The terms "include", "comprise", "have", "provided with", and any variants thereof in the specification and claims of the present application are intended to be open-ended expressions, that is, they encompass the elements specified in the present application but do not exclude other elements.

In the description of the present application, whether or not the word "about" or "approximately" is used, all numbers disclosed herein are approximate values. The value of each number may have a difference of 10% or less or a reasonable difference considered by those skilled in the art, such as 1%, 2%, 3%, 4%, or 5%.

In the description of the present application, the terms "first" and "second" are used for description only and are not to be construed as indicating or implying relative importance or implicitly specifying the number of technical features indicated. "First feature" and "second feature" may include one or more of such features.

The "ranges" disclosed in the present application are defined by lower and upper limits. A given range is defined by selecting a lower limit and an upper limit that delineate the boundaries of a particular range. Ranges defined in this manner may include or exclude the end values and can be combined arbitrarily, which means that any lower limit may be combined with any upper limit to form a range. For example, if ranges of 60 to 120 and 80 to 110 are listed for a particular parameter, it is understood that ranges of 60 to 110 and 80 to 120 are also anticipated. Additionally, if the minimum range values listed are 1 and 2, and the maximum range values listed are 3, 4, and 5, then the following ranges can all be anticipated: 1 to 3, 1 to 4, 1 to 5, 2 to 3, 2 to 4, and 2 to 5. In the present application, unless otherwise specified, the numerical range "a to b" represents an abbreviated representation of any combination of real numbers between a and b, where both a and b are real numbers. For example, the numerical range "0 to 5" indicates that all real numbers between "0 to 5" are listed herein, and "0 to 5" is merely an abbreviated representation of a combination of these numerical values. Additionally, when stating that a parameter is an integer ≥ 2, it is equivalent to disclosing that the parameter is, for example, an integer of 2, 3, 4, 5, 6, 7, 8, 9, 10, 11, 12, or the like.

In the description of the present application, "A and/or B" may include any of the following cases: A alone, B alone, and A and B, where A and B are only used for examples, and they may refer to any technical features connected by "and/or" as used in the present application.

Unless otherwise specified, all embodiments and optional embodiments of the present application can be combined with one another to form new technical solutions.

Unless otherwise specified, all technical features and optional technical features of the present application can be combined with one another to form new technical solutions.

In the present application, the order in which the steps are described does not imply a strict execution sequence that imposes any limitation on the implementation process. The specific order of execution for the steps should be determined based on their functionality and potential internal logic. Unless otherwise specified, all steps of the present application can be performed sequentially or randomly, preferably sequentially. For example, if the method includes steps (a) and (b), it indicates that the method may include steps (a) and (b) performed sequentially or steps (b) and (a) performed sequentially. For example, if the mentioned method may further include step (c), it indicates that step (c) may be added to the method in any order; for example, the method may include steps (a), (b), and (c), or steps (a), (c), and (b), or steps (c), (a), and (b), or the like.

In the battery, the separator can promote the diffusion of the electrolytic solution in the battery between the positive electrode and the negative electrode, thereby facilitating the cyclic deintercalation of metal active ions between the positive electrode and the negative electrode. At the end of the cycle of the battery, the electrolytic solution in the battery is relatively deficient, and at this time, the promoting effect of the separator is more prominent. In order to improve the adhesive strength between the separator and the electrode plate, the separator may include a base film and an adhesive layer located on the surface of the base film. The arrangement of the adhesive layer can effectively improve the adhesive force between the separator and the electrode plate, thereby promoting the cyclic deintercalation of metal active ions between the positive electrode and the negative electrode, and improving the structural stability of the battery. The adhesive layer located on the surface of the base film is generally composed of polymers. Since the size difference between the macromolecular chain segments in the polymer and the small molecule solvent in the electrolytic solution is relatively large, the solvent small molecules in the electrolytic solution may first penetrate and diffuse between the macromolecular chain segments of the polymer, to weaken the interaction force between the macromolecular chain segments, such that the polymer expands in volume, that is, the polymer swells in the electrolytic solution. When the swelling of the polymer in the electrolytic solution is excessively large, in one aspect, problems such as accelerated volume expansion and electrode pulverization may occur during the charging and discharging process of the battery, and even residual oligomers of the polymer may be precipitated, resulting in blocking of the pore channels of the separator; in another aspect, the swelling may further consume the electrolytic solution that is originally relatively deficient. As a result, the swelling of the polymer is excessively large, the adhesive effect between the electrode plate and the separator is greatly reduced, and the separator cannot effectively inhibit the volume expansion of the negative electrode plate during cyclic overcharging, especially the volume expansion of the silicon-based negative electrode system (the silicon content in the negative electrode active material is greater than 10%wt), resulting in wrinkling of the interface of the electrode plate, further accelerating the reversible capacity attenuation, and deteriorating the cycling kinetics of the battery.

The swelling of the polymer is closely related to the monomer composition of the polymer. When the degree of crosslinking of the polymer is relatively low and/or there are numerous flexible monomers in the polymer, the molecular chain segments of the polymer are more likely to move, thereby accelerating the swelling of the polymer in the electrolytic solution. In addition, the movement state of the molecular chain segments of the polymer is also affected by the temperature, and the higher the temperature is, the faster the movement of the molecular chains of the polymer is, such that the reason why the polymer excessively swells cannot be determined even at room temperature. Moreover, since the polymer hardly swells at a low temperature, and the degree of swelling and the degree of crosslinking of the polymer at a low temperature are not convenient for testing, the swelling resistance of the polymer cannot be effectively adjusted based on the swelling performance.

In the present application, the loss modulus of the polymer at a low temperature is defined. The loss modulus reflects energy lost by heat during the deformation of the polymer under the force, and can directly reflect the viscous component in the polymer. The viscous component in the polymer is directly related to the degree of crosslinking and the molecular chain segment rigidity of the polymer. In addition, since the molecular chain segments of the polymer move slowly at a low temperature, the loss modulus of the polymer at a low temperature can directly reflect the degree of crosslinking and the molecular chain segment rigidity of the polymer. Therefore, by optimizing the loss modulus of the polymer at a low temperature, a polymer having an appropriate degree of crosslinking and molecular chain segment rigidity can be obtained, thereby improving the adhesive property and the swelling resistance of the polymer, and further improving the adhesive effect and the swelling resistance between the separator and the adjacent electrode plate.

The loss modulus, also referred to as a viscous modulus, refers to the amount of energy lost due to viscous deformation (irreversible) when a material deforms, and reflects the viscosity of the material.

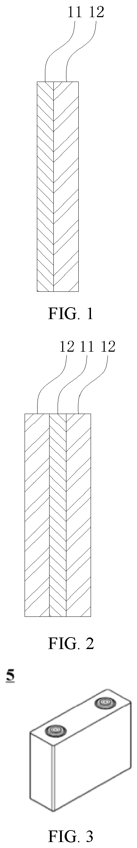

In a first aspect of the present application, the present application provides a separator. Referring to FIG.1, the separator includes a base film 11 and an adhesive layer 12 at least located on one side of the base film 11. The adhesive layer includes a polymer, and a loss modulus of the polymer at 10 °C is 5 × 10⁶ Pa to 9 × 10⁸ Pa.

The loss modulus of the polymer is strongly correlated with the adhesive property of the polymer. When the loss modulus of the polymer falls within an appropriate range, the polymer exhibits a relatively high adhesive property and superior swelling resistance.

When the loss modulus of the polymer at 10 °C falls within the above range, the polymer contains an appropriate amount of rigid monomers and has an appropriate degree of crosslinking, such that the mobility of the molecular chain segments in the polymer is relatively poor, and swelling in the electrolytic solution is not easy to occur. Meanwhile, the polymer having the above loss modulus at 10 °C also exhibits superior low-temperature adhesive property, helping improve the adhesive effect between the separator and the adjacent electrode plate, improving the low-temperature kinetic performance of the battery using the above separator, and further improving the cycle performance of the battery.

In the present application, the loss modulus of the polymer at 10 °C may be tested by using methods well known in the art. As an example, the loss modulus may be tested by the following method:
(1) Preparation of an adhesive film: A polymer emulsion is prepared into an aqueous solution with a solid content of 50%, and the solution is allowed to stand on a culture dish at 25 °C for 24 hours to form an adhesive film having a thickness of 1 mm; (2) the prepared adhesive film is placed on an Anton Paar device (MCR302); (3) a rotor having a diameter of 8 mm is used to press the adhesive film from above; (4) the pressure is set to 1.0 N; and (5) the temperature is raised at a rate of 1 °C per minute, and the test is performed at a frequency of 1 Hz. The loss modulus of the polymer at 10 °C can be obtained by recording the value at 10 °C from -25 °C to 50 °C.

In some embodiments, referring to FIG. 2, the base film 11 is provided with two surfaces opposite to each other in its own thickness direction, and the adhesive layer 12 is disposed on the two opposite surfaces of the base film 12. Therefore, when the separator is disposed between the positive electrode plate and the negative electrode plate, the adhesive effect between the separator and each of the positive electrode plate and the negative electrode plate is relatively good.

In some embodiments, the degree of crosslinking of the polymer is a, where a ≥ 75%.

As an example, the degree of crosslinking of the polymer may be 75%, 76%, 77%, 78%, 79%, 80%, 81%, 82%, 83%, 84%, 85%, 86%, 87%, 88%, 89%, 90%, 91%, 92%, 93%, 94%, 95%, 96%, 97%, 98%, 99%, or 100%.

When the degree of crosslinking of the polymer falls within the above range, the molecular chain segments in the polymer move slowly in the electrolytic solution, and the small molecule solvent in the electrolytic solution is not easy to penetrate between the molecular chain segments, thereby helping improve the excessive swelling of the polymer in the electrolytic solution, and reducing the case where pores of the base film are blocked due to the excessive volume expansion of the polymer particles.

The degree of crosslinking a of the polymer may be tested by using methods well known in the art. As an example, the test method may adopt the following steps:
(1) 6 g of polymer particles are weighed by using two stacked layers of weighing paper (a weighing balance used is a Uni Bloc SHIMADZU AUY220 balance with a readability of 0.1 mg);
(2) the weighed polymer particles are dried in a vacuum oven (the vacuum oven used is an LDZF-6090 vacuum oven from LIKCTR, with a size of 450 × 450 × 450, RT to 250 °C) at 105 °C for 6 h;
(3) two layers of medium-speed filter paper (the medium-speed filter paper used is the quantitative medium-speed filter paper from NEWSTAR) are stacked and numbered and dried in the vacuum oven (the vacuum oven used is the LDZF-6090 vacuum oven from LIKCTR, with a size of 450 × 450 × 450, RT to 250 °C) at 105 °C for 6 h;
(4) the polymer particles and the weighing paper are taken out from the vacuum oven and then immediately sealed with a sealing bag to prevent water absorption;
(5) the medium-speed filter paper is taken out from the vacuum oven and then immediately loaded into a resealable bag for weighing, and the total weight m₁ of the medium-speed filter paper and the resealable bag is recorded, the weight value being rounded to four decimal places;
(6) the polymer particles obtained in step (4) are poured into a small crusher (the crusher used is an LG-01 crusher from Baixin, with a power of 350 W, a fineness of 30 meshes to 300 meshes, a rotation speed of 2500 r/m, and a crushing amount of 500 g/m), and then the cover is closed and screwed;
(7) the power supply is plugged in, a power switch is turned on, and the power switch is turned off after counting for 30 s with a stopwatch;
(8) the crusher is allowed to stand for 5 min, and after the powder in the crusher has settled, the cover of the crusher is unscrewed, the sample being in a uniform powder state;
(9) the crushed sample is transferred to the resealable bag with a brush and immediately sealed;
(10) a centrifuge tube and a centrifuge tube cover are tared on the balance, the sample bag is taken out from the drying dish, then about 2 ± 0.2 g of the sample is poured into the centrifuge tube, the centrifuge tube cover is immediately closed, and the actual weight m₂ of the sample is weighed;
(11) 50 mL of dimethyl carbonate (DMC) is added according to the scale on the 50 mL centrifuge tube;
(12) the centrifuge tube is transferred to an oven (the oven used is a GZX-9146MBE oven from Boxun, with a capacity of 129 L, RT+5 °C to 300 °C) and held at 60 °C for 12 h;
(13) after the centrifuge tube is taken out from the oven, the sample is poured onto the medium-speed filter paper, then the solution is filtered, and the filter residue is retained;
(14) the centrifuge tube is rinsed with a large amount of DMC solution to prevent the sample from remaining in the centrifuge tube;
(15) the filter residue is dried in the oven at 105 °C for 2 h;
(16) after the sample baking is completed, the sample is loaded into the corresponding resealable bag for weighing; and
(17) the balance is reset to zero to weigh the total mass of the filter residue, the medium-speed filter paper, and the resealable bag, and the mass m₃ is recorded; and
   the degree of crosslinking a of the obtained polymer particles is calculated according to $Degree of crosslinking = \frac{1 - \frac{m 2 - \left(m3-m1\right)}{m 2}}{2} \times 100 % .$

In some embodiments, the degree of mass swelling of the polymer at 70 °C is b, where 36% ≤ b ≤ 75%.

In some embodiments, when 36% ≤ b ≤ 75%, a/b may be greater than or equal to 1.

When a/b falls within the above range, the polymer particles have an appropriate loss modulus, which can improve the adhesive force of the polymer. Meanwhile, the polymer particles do not excessively swell in the electrolytic solution to consume too much electrolytic solution, and also the case where pores of the base film are blocked due to the excessive volume expansion of the polymer particles is reduced.

In some embodiments, 80% ≤ a ≤ 90%, and 43% ≤ b ≤ 60%.

In some embodiments, when 80% ≤ a ≤ 90%, and 43% ≤ b ≤ 60%, a/b may be 1 to 2.1, which helps further improve the swelling resistance of the polymer.

As an example, a/b may be 1, 1.1, 1.2, 1.3, 1.4, 1.5, 1.6, 1.7, 1.8, 1.9, 2.0, or 2.1.

The degree of mass swelling b of the polymer at 70 °C may be tested by using methods well known in the art. As an example, the test method may adopt the following steps:
(1) Dissolution: 10 g of the polymer particle powder and 90 g of N-methylpyrrolidone (NMP) are mixed and stirred at 40 °C for 7 h to dissolve;
(2) Preparation of an adhesive film: The stirred adhesive solution of the polymer particle powder is placed in a 250 mL beaker and baked at 70 °C for 8 days to obtain a dry adhesive film;
(3) Swelling rate test: About 3 g of the dry adhesive film having a thickness of 2 mm is taken, and its accurate mass is weighed and recorded as M₁. The dry adhesive film is immersed in an electrolytic solution (a mass ratio of ethylene carbonate (EC) to ethyl methyl carbonate (EMC) to diethyl carbonate (DEC) in an electrolyte solvent is 3:5:2, and the electrolyte solvent and lithium hexafluorophosphate (LiPF₆) are mixed to prepare a 1 mol/L electrolytic solution), and the solution is baked in an oven at 70 °C for 24 h. After taking out the sample and allowing it to stand for 1 h, the sample is wiped clean, and its mass M₂ is weighed. The degree of mass swelling b of the polymer particles is calculated according to $Degree of mass swelling = \frac{M 2 - M 1}{M 1} \times 100 %$.

In some embodiments, the loss modulus of the polymer at 25 °C is 1 × 10⁶ Pa to 9 × 10⁷ Pa.

The loss modulus of the polymer is inversely proportional to the temperature of the polymer. When the loss modulus of the polymer at 25 °C falls within the above range, the polymer exhibits superior adhesive property and swelling resistance at 25 °C. Meanwhile, the loss modulus of the polymer at 10 °C falls within the above range.

By using appropriate polymer monomers, the polymer can have a superior degree of crosslinking and molecular chain segment rigidity, such that the polymer has an appropriate loss modulus.

In the present application, the loss modulus of the polymer at 25 °C may be tested by using methods well known in the art. As an example, the loss modulus may be tested by the following method:
(1) Preparation of an adhesive film: A polymer emulsion is prepared into an aqueous solution with a solid content of 50%, and the solution is allowed to stand on a culture dish at 25 °C for 24 hours to form an adhesive film having a thickness of 1 mm; (2) the prepared adhesive film is placed on an Anton Paar device (MCR302); (3) a rotor having a diameter of 8 mm is used to press the adhesive film from above; (4) the pressure is set to 1.0 N; and (5) the temperature is raised at a rate of 1 °C per minute, and the test is performed at a frequency of 1 Hz. The loss modulus of the polymer at 25 °C can be obtained by recording the value at 25 °C from -25 °C to 50 °C.

In some embodiments, the polymer monomer containing a hydroxyl group may be used as an internal crosslinking agent to improve the degree of crosslinking of the polymer.

In some embodiments, the monomer of the polymer and the derivatives of the monomer of the polymer include at least a first monomer. The structure of the first monomer is shown in formula 1: 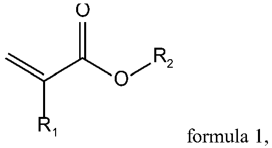 where R₁ includes a hydrogen atom or a C₁-C₄ alkyl group, and R₂ includes one of a substituted or unsubstituted C₁-C₄ alkyl group, a substituted or unsubstituted C₃-C₄ isobornyl group, a -CH₂(CH₂)ₙ₁-O-phenyl ring, and a -CH₂(CH₂)ₙ₂-O epoxy group, where a substituent of the substituted C₁-C₄ alkyl group includes a hydroxy group or a C₁-C₆ alkyl group, and n1 and n2 are each independently 1 to 3.

In some embodiments, when R₂ is a -CH₂(CH₂)ₙ₁-O-phenyl ring or a -CH₂(CH₂)ₙ₂-O epoxy group, the R₂ group is linked to an oxygen atom through a methylene group.

During the manufacturing process of the battery, a hot pressing process or a cold pressing process needs to be performed to enable the separator and the electrode plate to be tightly bound, such that the hardness of the cell is sufficient to quickly and efficiently enter the housing. The first monomer including an unsaturated ester group is beneficial to the polymerization of the monomers and can form the backbone of the molecular chain segments of the polymer, such that the polymer has good molecular chain segment rigidity and adhesive property, helping improve the swelling resistance of the polymer. The appropriate swelling resistance helps improve the contribution of the separator to the kinetics in the state of electrolytic solution deficiency during the late cycle of the battery.

In some embodiments, the first monomer includes at least one of ethyl acrylate, n-butyl acrylate, n-propyl acrylate, isobutyl acrylate, sec-butyl acrylate, tert-butyl acrylate, cyclohexyl acrylate, isooctyl acrylate, lauryl acrylate, 2-ethylhexyl acrylate, methyl acrylate, methyl methacrylate, ethyl methacrylate, n-butyl methacrylate, 2-ethylhexyl methacrylate, isobornyl methacrylate, lauryl methacrylate, vinyl acetate, trimethylolpropane triacrylate, 2-hydroxyethyl acrylate, 2-hydroxypropyl acrylate, 2-hydroxyethyl methacrylate, 2-hydroxypropyl methacrylate, glycidyl methacrylate, and 2-phenoxyethyl acrylate.

Using any one or more of the first monomers described above can adjust the adhesive property and swelling resistance of the polymer.

In some embodiments, the monomer of the polymer and the derivatives of the monomer of the polymer further include a second monomer. The structure of the second monomer is shown in formula 2 and/or formula 3: 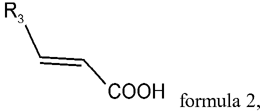 and/or, 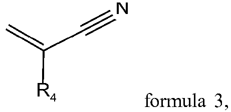 where R₃ includes a hydrogen atom or a C₁-C₈ alkyl group, and R₄ includes a hydrogen atom or a C₁-C₈ alkyl group.

The second monomer contains and has a carboxyl functional group and/or a cyano functional group. The carboxyl group and the cyano group, in one aspect, can improve the adhesive property between the polymer and the electrode plate, and in another aspect, can improve the crosslinking active sites of the polymer. That is, the carboxyl group and the cyano group, as the internal crosslinking agents, enter the macromolecular structural chain during the polymerization of the monomers, thereby improving the degree of crosslinking of the polymer, and improving the rigidity and swelling resistance of the polymer. In addition, both the carboxyl functional group and the cyano functional group are polar functional groups, helping improve the solvation and desolvation capabilities of lithium ions, thereby improving the ionic conductivity of the separator, and improving the kinetic performance of the battery.

In some embodiments, the second monomer includes at least one of acrylonitrile, methacrylonitrile, ethacrylonitrile, acrylic acid, methacrylic acid, crotonic acid, and heptenoic acid.

Using any one or more of the second monomers described above can adjust the adhesive property of the polymer, and the monomer containing a cyano group can further improve the ionic conductivity of the polymer and improve the kinetic performance of the polymer.

In some embodiments, the monomer of the polymer and the derivatives of the monomer of the polymer further include a third monomer. The structure of the third monomer is shown in formula 4: 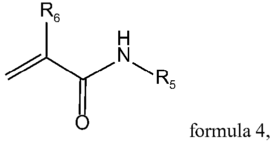 where R₅ includes a hydrogen atom, a hydroxyl-substituted C₁-C₆ alkyl group, or a C₁-C₆ alkoxy group, and R₆ includes a hydrogen atom or a C₁-C₆ alkyl group.

The structure of the third monomer including an unsaturated amide group is beneficial to the polymerization of the monomers, and the class of monomers function to adjust the molecular weight and also exhibit good adhesive property and swelling resistance. The amide group may also form a bond with the functional group on the base film, which improves the adhesive property of the polymer and the base film.

In some embodiments, the third monomer includes at least one of acrylamide, N-hydroxymethyl acrylamide, and N-butoxymethylacrylamide.

Using any one or more of the third monomers described above can function to adjust the molecular weight, thereby adjusting the molecular weight of the polymer. The molecular weight of the polymer within a specific range helps improve the adhesive property.

In some embodiments, the base film includes at least one of polyethylene, polypropylene, polyvinylidene fluoride, polytetrafluoroethylene, polyethylene terephthalate, polybutylene terephthalate, polyacetal, polyamide, polycarbonate, polyimide, polyetheretherketone, polyaryletherketone, polyetherimide, polyamideimide, polybenzimidazole, polyether sulfone, polyphenylene oxide, cycloolefin copolymer, polyphenylene sulfide, and polyethylene naphthalene. Therefore, this helps improve the adhesive force of the polymer to the base film.

By using the base film made of the above materials, the adhesive force of the polymer to the base film can be effectively improved, and the structural stability of the separator is improved.

The base film is made of a film material with a porous structure having good chemical stability and mechanical stability. In some embodiments, the base film may be made of a single-layer film material or a multi-layer composite film material. When the base film is made of a multi-layer composite film material, the materials of the layers may be the same or different.

In some embodiments, the porosity of the base film is 10% to 95%, such as 15% to 90%, 20% to 85%, 25% to 80%, 30% to 75%, 35% to 70%, 40% to 65%, 45% to 60%, or 50% to 55%. Therefore, the probability that the positive electrode plate and the negative electrode plate are in direct contact can be reduced while the ionic conductivity of the separator is improved.

In some embodiments, the pore diameter of the base film is 0.1 µm to 50 µm, such as 0.5 µm to 50 µm, 1 µm to 45 µm, 5 µm to 40 µm, 10 µm to 35 µm, 15 µm to 30 µm, or 20 µm to 25 µm. The base film having the above pore structure is selected, such that the separator has good ionic conductivity, reducing the probability that the positive electrode plate and the negative electrode plate are in direct contact, and improving the kinetics of the battery.

In some embodiments, the loss modulus of the polymer at 10 °C is 6 × 10⁷ Pa to 1.4 × 10⁸ Pa. Therefore, the separator has superior adhesive property and swelling resistance.

In a second aspect of the present application, the present application provides a method for preparing the above separator. The method includes:

In S1, a base film is provided.

In some embodiments, for the relevant parameters of the base film, reference may be made to some or all technical features in the above embodiments. For any aspects that are not described in this embodiment, reference may also be made to the above embodiments and related drawings, which will not be repeated herein.

In S2, a polymer is disposed on at least one side of the base film.

In some embodiments, the polymer is disposed on one side of the base film to form an adhesive layer, such that the above separator can be prepared by a simple method.

In some embodiments, S2 may be performed by using the following steps: (S2-1) providing an adhesive layer slurry, the adhesive layer slurry including a polymer; and (S2-2) coating at least one side of the base film with the adhesive layer slurry and drying to obtain the separator.

In some embodiments, in step (S2-1), the solvent in the adhesive layer slurry may be water, such as deionized water.

In some embodiments, in step (2-1), the adhesive layer slurry may further include other organic compounds. For example, the adhesive layer slurry may further include a polymer for improving heat resistance, a dispersant, a wetting agent, and the like.

In some embodiments, in step (2-2), the coating may be performed using a coater.

In some embodiments, in step (2-2), the coating may be at least one of transfer coating, rotary spray coating, and dip coating.

In some embodiments, the coater includes a gravure roller; the gravure roller is configured to transfer the adhesive layer slurry to the base film.

In some embodiments, the polymer in the adhesive layer slurry may be provided by the following method: The constituent monomers of the polymer, an emulsifier, and an initiator are blended and stirred in a molar ratio of 100:(2-10):(0.2-1), and the mixture is heated for reaction to obtain a polymer emulsion. The polymer emulsion is subjected to spray drying to obtain the polymer, such that the polymer emulsion can be obtained by emulsion polymerization, and the yield of the polymer can be improved.

Emulsion polymerization means that monomers are dispersed in water by means of an emulsifier and mechanical stirring to form an emulsion, and then an initiator is added to initiate the polymerization of the monomers.

The emulsifier refers to a class of substances which make immiscible oil and water become a hardly layered emulsion. The emulsifier is usually a surfactant with the nature of some hydrophilic polar groups and hydrophobic (oleophylic) non-polar groups.

The initiator is a substance capable of initiating the polymerization reaction of monomers. For example, a free radical initiator refers to a class of compounds that is easily decomposed into free radicals (i.e., primary free radicals) during heating, and may be used to initiate free radical polymerization and copolymerization of olefine and diene monomers.

In some embodiments, the emulsifier may include at least one of sodium dodecylsulfonate, sodium dodecylbenzenesulfonate, sodium dodecylsulfate, sodium dodecylbenzenesulfonate, sodium laurate, sodium stearate, and sodium palmitoleate.

In some embodiments, the initiator may satisfy at least one of the following conditions: a persulfate initiator includes at least one of potassium persulfate and ammonium persulfate; an acyl peroxide initiator includes at least one of benzoyl peroxide and di-n-octanoyl peroxide; and an azo initiator includes at least one of azobisisobutyronitrile and dimethyl azobisisobutyrate.

In some embodiments, constituent monomers of the polymer may include the first monomer, the second monomer, and the third monomer described above. A mass ratio of the first monomer to the second monomer to the third monomer may be 100:(1-50):(10-40), such that the polymer has the advantages of the first monomer, the second monomer, and the third monomer, while exhibiting superior adhesive property and swelling resistance.

In some embodiments, the adhesive layer is disposed on only one surface of the base film. In some other embodiments, the adhesive layer is disposed on both surfaces of the base film.

In a third aspect of the present application, the present application provides a battery. The battery includes the above separator, and/or the separator obtained by using the above method. Therefore, the battery has all the features and advantages of the above separator and the method for preparing the separator, which will not be repeated herein.

Typically, a battery includes a positive electrode plate, a negative electrode plate, an electrolyte, and a separator. During the charging and discharging process of the battery, active ions are intercalated and deintercalated back and forth between the positive electrode plate and the negative electrode plate. The electrolyte conducts active ions between the positive electrode plate and the negative electrode plate. The separator is disposed between the positive electrode plate and the negative electrode plate to primarily prevent the positive and negative electrodes of the battery from short-circuiting while allowing the passage of ions.

In some embodiments, the battery is a lithium-ion battery, and a lithium plating window of the battery at 10 °C is 0.7C to 1.5C.

At a low temperature, the mobility of lithium ions in a lithium battery is significantly reduced, resulting in a sharp increase in the internal resistance of the battery, a serious loss of discharge capacity, and a decrease in the lithium plating window during battery charging. A slightly large charging current may cause lithium plating, and the plated metallic lithium dendrites may pierce the separator, resulting in thermal runaway.

The lithium plating window refers to the maximum current that can be achieved by the battery without lithium plating (there is no white spot on the surface of the negative electrode plate), which is also referred to as the maximum non-lithium plating rate of the battery.

When the above separator is used in the battery, since the separator still has good adhesive property at a low temperature, it is beneficial to improving the adhesive effect between the separator and the adjacent electrode plate, improving the low-temperature kinetic performance of the battery using the above separator, and widening the lithium plating window of the battery, which is consistent with the lithium plating window of the battery at room temperature, thereby improving the cycle performance of the battery.

The lithium plating window of the battery may be tested by using methods well known in the art. As an example, the test method may adopt the following steps. The sample preparation steps include: (1) An unrolled bare cell is taken, and three or more copper wires are placed at the middle position of the outer second layer of the negative electrode plate corresponding to the separator, and fixed at the upper edge of the anode electrode plate with an adhesive tape; (2) a small piece of separator is applied on the copper wires to ensure that the copper wires are covered and not in contact with each other, and the separator is fixed with the adhesive tape; if the cell is a four-electrode cell, one or more copper wires (SE) need to be not covered by the separator and are marked to distinguish from the remaining copper wires; (3) the bare cell is rewound while being careful not to displace the copper wires, and the sizes of the negative electrode plate in the length and width directions are maintained to be greater than those of the positive electrode plate; and (4) the rolling process is continued, the cold pressing is first performed (25 °C, 3 MPa, 10 s), and then the hot pressing is performed (55 °C, 5 MPa, 15 s), to obtain the cell to be tested.

The test steps include a capacity test and a continuous charging window test. Taking the positive electrode active material being a nickel-cobalt-manganese ternary material as an example, the capacity test includes: (1) The cell to be tested is allowed to stand for 30 min; (2) the cell to be tested is charged at a direct current of 0.33C to 2.8 V; (3) the cell to be tested is allowed to stand for 5 min; (4) the cell to be tested is charged at a constant current of 0.33C to 4.35 V, and then charged at a constant voltage until the current ≤ 0.05C; (5) the cell to be tested is allowed to stand for 5 min; (6) the cell to be tested is discharged at a direct current of 0.33C to 2.8 V, and the battery capacity Cₙ is recorded; and (7) the cell to be tested is allowed to stand for 5 min. In the entire capacity test process, the test temperature is 25 °C, and the test sampling interval is 10 S/mA/mV.

The continuous charging window test includes: (1) The cell to be tested is allowed to stand for 30 min; (2) the cell to be tested is charged at a direct current of 0.33C to 2.8 V; (3) the current supply is stopped, and the cell to be tested is placed at -10 °C; (4) the cell to be tested is allowed to stand for 2 h; and (5) the cell to be tested is charged at different rates to 4.35 V, the capacity C₁ before the jump (the jump point indicates that the negative electrode potential reaches -10 mV or the voltage reaches 4.35 V) is read, and the test at the next rate is performed. The test rate sequentially includes the following: 0.08C, 0.1C, 0.2C, 0.4C, 0.6C, 0.8C, 1C, 1.5C, 2C, and 3C. C₁/Cₙ is the SOC at the time of jump, and a rate-SOC curve at the temperature is obtained by taking the SOC as the X axis and the rate as the Y axis. The corresponding charging rate at 50% SOC can be obtained through the rate-SOC curve, and C₁ corresponding to 50% SOC is the rate without lithium plating at the temperature.

In the continuous charging window test, the test temperature of steps (1) and (2) is 25 °C, and the test sampling interval is 60 S/mA/mV; the test temperature of steps (3) and (4) is -10 °C, and the test sampling interval is 60 S/mA/mV; and the test temperature of step (5) is -10 °C, and the test sampling interval is 10 S/mA/mV.

### [Positive Electrode Plate]

As an example, referring to FIG. 2, a positive electrode current collector is provided with two surfaces opposite to each other in its own thickness direction, and a positive electrode active material layer 22 is disposed on either or both of the two opposite surfaces of the positive electrode current collector 21.

In some embodiments, a metal foil or a composite current collector may be used as the positive electrode current collector. For example, as the metal foil, an aluminum foil may be used. The composite current collector may include a polymer material base layer and a metal layer formed on at least one side surface of the polymer material base layer. The composite current collector may be formed by forming a metal material (aluminum, aluminum alloy, nickel, nickel alloy, titanium, titanium alloy, silver, silver alloy, or the like) on a polymer material substrate (such as a substrate made of polypropylene (PP), polyethylene terephthalate (PET), polybutylene terephthalate (PBT), polystyrene (PS), and polyethylene (PE)).

In some embodiments, when the battery is a lithium-ion battery, a positive electrode active material for use in lithium-ion batteries well known in the art may be used as the positive electrode active material.

As an example, the positive electrode active material may include at least one of the following materials: a lithium-containing phosphate with an olivine structure, a lithium transition metal oxide, and respective modified compounds thereof. However, the present application is not limited to these materials, and other conventional materials that can be used as positive electrode active materials for the battery may also be used. These positive electrode active materials may be used alone or in combination of two or more. Examples of the lithium transition metal oxide may include, but are not limited to, at least one of a lithium cobalt oxide (such as LiCoO₂), a lithium nickel oxide (such as LiNiO₂), a lithium manganese oxide (such as LiMnO₂ or LiMn₂O₄), a lithium nickel cobalt oxide, a lithium manganese cobalt oxide, a lithium nickel manganese oxide, a lithium nickel cobalt manganese oxide (such as LiNi_{1/3}Co_{1/3}Mn_{1/3}O₂ (also referred to as NCM₃₃₃), LiNi_{0.5}Co_{0.2}Mn_{0.3}O₂ (also referred to as NCM₅₂₃), LiNi_{0.5}Co_{0.25}Mn_{0.25}O₂ (also referred to as NCM₂₁₁), LiNi_{0.6}Co_{0.2}Mn_{0.2}O₂ (also referred to as NCM₆₂₂), or LiNi_{0.8}Co_{0.1}Mn_{0.1}O₂ (also referred to as NCM₈₁₁)), a lithium nickel cobalt aluminum oxide (such as LiNi_{0.8}Co_{0.15}Al_{0.05}O₂), and modified compounds thereof. Examples of the lithium-containing phosphate with an olivine structure may include, but are not limited to, at least one of lithium iron phosphate (such as LiFePO₄ (also referred to as LFP)), a composite material of lithium iron phosphate and carbon, lithium manganese phosphate (such as LiMnPO₄), a composite material of lithium manganese phosphate and carbon, lithium manganese iron phosphate, and a composite material of lithium manganese iron phosphate and carbon. The modified compounds of the materials described above may be obtained by doping modification and/or surface-coating modification of the materials.

The battery, during the charging and discharging process, undergoes deintercalation and consumption of Li, and the molar content of Li varies when the battery is discharged to different states. In the enumeration related to the positive electrode active material in the present application, the molar content of Li is in an initial state in the material, i.e., a state before the material is added, and when the positive electrode active material is applied to a battery system, the molar content of Li varies after charging and discharging cycles.

In some embodiments, when the battery is a sodium-ion battery, a positive electrode active material for use in sodium-ion batteries well known in the art may be used as the positive electrode active material.

As an example, the positive electrode active material may include at least one of the following materials: a sodium transition metal oxide, a polyanionic compound, a Prussian blue sodium compound, and respective modified compounds thereof. However, the present application is not limited to these materials, and other conventional materials that can be used as positive electrode active materials for the battery may also be used. The modified compounds of the materials described above may be obtained by doping modification and/or surface-coating modification of the materials.

In some embodiments, the transition metal in the sodium transition metal oxide may be at least one of Ti, V, Mn, Co, Ni, Fe, Zn, V, Zr, Ce, Cr, and Cu. The chemical formula of the sodium transition metal oxide may satisfy NaₓMO₂, where M includes at least one of Ti, V, Mn, Co, Ni, Fe, Zn, V, Zr, Ce, Cr, and Cu, and 0 < x ≤ 1.

In some embodiments, the polyanionic compound may be a class of compounds having sodium ions, transition metal ions, and tetrahedral (YO₄)ⁿ⁻ anion units. The transition metal may include at least one of Mn, Fe, Ni, Co, Cr, Cu, Ti, Zn, V, Zr, and Ce; Y may include at least one of P, S, and Si; and n represents the valence state of (YO₄)ⁿ⁻.

In some embodiments, the polyanionic compound may also be a class of compounds having sodium ions, transition metal ions, tetrahedral (YO₄)ⁿ⁻ anion units, and halide anions. The transition metal may include at least one of Mn, Fe, Ni, Co, Cr, Cu, Ti, Zn, V, Zr, and Ce; Y may include at least one of P, S, and Si, and n represents the valence state of (YO₄)ⁿ⁻; and the halogen may include at least one of F, Cl, and Br.

In some embodiments, the polyanionic compound may also be a class of compounds having sodium ions, tetrahedral (YO₄)ⁿ⁻ anion units, polyhedral units (ZO_{y})^{m+}, and optionally halide anions. M may include at least one of Mn, Fe, Ni, Co, Cr, Cu, Ti, Zn, V, Zr, and Ce, Y may include at least one of P, S, and Si, n represents the valence state of (YO₄)ⁿ⁻, Z represents a transition metal, m represents the valence state of (ZO_{y})^{m+}, and the halogen may include at least one of F, Cl, and Br.

As an example, the polyanionic compound may satisfy at least one of the chemical formulas: NaFePO₄, Na₃V₂(PO₄)₃ (sodium vanadium phosphate, referred to as NVP), Na₄Fe₃(PO₄)₂(P₂O₇), NaM'PO₄F (M' includes at least one of V, Fe, Mn, and Ni), and Na₃(VO_{y})₂(PO₄)₂F_{3-2y} (0 ≤ y ≤ 1).

In some embodiments, the Prussian blue compound may be a class of compounds having sodium ions, transition metal ions, and cyanide ions (CN⁻). The transition metal may include at least one of Mn, Fe, Ni, Co, Cr, Cu, Ti, Zn, V, Zr, and Ce.

As an example, the Prussian blue compound may satisfy the chemical formula NaₐMe_{b}Me'_{c}(CN)₆, where Me and Me' each independently include at least one of Ni, Cu, Fe, Mn, Co, and Zn, 0 < a ≤ 2, 0 < b < 1, and 0 < c < 1.

The battery, during the charging and discharging process, undergoes deintercalation and consumption of Na, and the molar content of Na varies when the battery is discharged to different states. In the enumeration related to the positive electrode active material in the present application, the molar content of Na is in an initial state of the material, i.e., a state before the material is added, and when the positive electrode active material is applied to a battery system, the molar content of Na varies after charging and discharging cycles.

In the enumeration related to the positive electrode active material in the present application, the molar content of O is only a theoretical value. The molar content of oxygen may vary due to oxygen release from the crystal lattice, and actually, the molar content of O will fluctuate.

In some embodiments, the positive electrode active material layer further optionally includes a binder.

As an example, the binder may include at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorinated acrylic resin.

In some embodiments, the positive electrode active material layer further optionally includes a conductive agent.

As an example, the conductive agent may include at least one of superconducting carbon, acetylene black, carbon black, Ketjen black, a carbon dot, a carbon nanotube, graphene, and a carbon nanofiber.

In some embodiments, the positive electrode plate can be prepared in the following manner: dispersing the components described above for preparing the positive electrode plate, such as the positive electrode active material, the conductive agent, the binder, and any other components, in a solvent (such as N-methylpyrrolidone) to form a positive electrode slurry; and coating the positive electrode current collector with the positive electrode slurry, and performing drying, cold pressing, and other processes, such that the positive electrode plate can be obtained.

### [Negative Electrode Plate]

The negative electrode plate includes a negative electrode current collector and a negative electrode active material layer disposed on at least one side surface of the negative electrode current collector, and the negative electrode active material layer includes a negative electrode active material.

As an example, the negative electrode current collector is provided with two surfaces opposite to each other in its own thickness direction, and the negative electrode active material layer is disposed on either or both of the two opposite surfaces of the negative electrode current collector.

In some embodiments, a metal foil or a composite current collector may be used as the negative electrode current collector. For example, as the metal foil, a copper foil may be used. The composite current collector may include a polymer material base layer and a metal layer formed on at least one side surface of the polymer material substrate. The composite current collector may be formed by forming a metal material (copper, copper alloy, nickel, nickel alloy, titanium, titanium alloy, silver, silver alloy, and the like) on a polymer material substrate (such as a substrate made of polypropylene (PP), polyethylene terephthalate (PET), polybutylene terephthalate (PBT), polystyrene (PS), and polyethylene (PE)).

In some embodiments, a negative electrode active material for use in batteries well known in the art may be used as the negative electrode active material. As an example, the negative electrode active material may include at least one of the following materials: artificial graphite, natural graphite, soft carbon, hard carbon, a silicon-based material, a tin-based material, lithium titanate, and the like. The silicon-based material includes at least one of elemental silicon, a silicon-oxygen compound, a silicon-carbon composite, a silicon-nitrogen composite, and a silicon alloy. The tin-based material includes at least one of elemental tin, a tin-oxygen compound, and a tin alloy. However, the present application is not limited to these materials, and other conventional materials that can be used as negative electrode active materials for the battery may also be used. These negative electrode active materials may be used alone or in combination of two or more.

In some embodiments, the negative electrode active material layer further optionally includes a conductive agent. The conductive agent includes at least one of superconducting carbon, acetylene black, carbon black, Ketjen black, a carbon dot, a carbon nanotube, graphene, and a carbon nanofiber.

In some embodiments, the negative electrode active material layer further optionally includes other auxiliary agents, such as a thickener (e.g., sodium carboxymethylcellulose (CMC-Na)).

In some embodiments, the negative electrode plate can be prepared in the following manner: dispersing the components described above for preparing the negative electrode plate, such as the negative electrode active material, the conductive agent, the binder, and any other components, in a solvent (such as deionized water) to form a negative electrode slurry; and coating the negative electrode current collector with the negative electrode slurry, and performing drying, cold pressing, and other processes, such that the negative electrode plate can be obtained.

### [Electrolyte]

The electrolyte conducts ions between the positive electrode plate and the negative electrode plate. The present application does not specifically limit the type of the electrolyte, which can be selected according to requirements. For example, the electrolyte may be liquid, gel, or all solid.

In some embodiments, the electrolyte is an electrolytic solution. The electrolytic solution includes an electrolyte salt and a solvent.

In some embodiments, the electrolyte salt includes at least one of lithium hexafluorophosphate, lithium tetrafluoroborate, lithium perchlorate, lithium hexafluoroarsenate, lithium bis(fluorosulfonyl)imide, lithium bis(trifluoromethanesulfonyl)imide, lithium trifluoromethanesulfonate, lithium difluorophosphate, lithium difluoro(oxalato)borate, lithium bis(oxalato)borate, lithium difluorobis(oxalato)phosphate, and lithium tetrafluoro(oxalato)phosphate.

In some embodiments, the solvent includes at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, dimethyl sulfone, ethyl methyl sulfone, and diethyl sulfone.

In some embodiments, the electrolytic solution further optionally includes an additive. For example, the additive may include a negative electrode film-forming additive and a positive electrode film-forming additive, and may further include an additive capable of improving certain properties of the battery, such as an additive for improving the overcharge performance of the battery and an additive for improving the high- or low-temperature performance of the battery.

In some embodiments, the positive electrode plate, the negative electrode plate, and the separator may be manufactured into an electrode assembly through a winding process or a stacking process.

In some embodiments, the battery may include an outer packaging. The outer packaging may be configured to package the electrode assembly and electrolyte described above.

In some embodiments, the outer packaging of the battery may be a hard shell, such as a hard plastic shell, an aluminum shell, or a steel shell. The outer packaging of the battery may also be a soft pack, such as a pouch-type soft pack. The soft pack may be made of plastic, and examples of the plastic may include polypropylene, polybutylene terephthalate, polybutylene succinate, and the like.

The present application does not particularly limit the shape of the battery, and it may have a cylindrical shape, a prismatic shape, or any other shape. For example, FIG. 3 shows a battery cell 5 having a prismatic structure as one example.

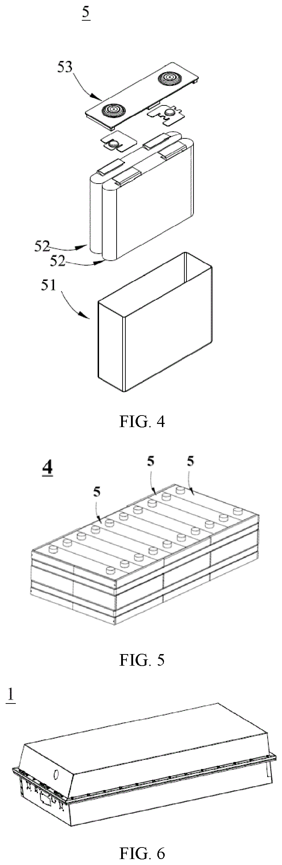

In some embodiments, referring to FIG. 4, the outer packaging may include a housing 51 and a top cover assembly 53. The housing 51 may include a bottom plate and side plates connected to the bottom plate, and the bottom plate and the side plates define, in an enclosing manner, an accommodating cavity. The housing 51 is provided with an opening in communication with the accommodating cavity, and the top cover assembly 53 is capable of lidding the opening to close the accommodating cavity. The positive electrode plate, the negative electrode plate, and the separator may be subjected to a winding process or a stacking process to form an electrode assembly 52. The electrode assembly 52 is packaged in the accommodating cavity. The electrolytic solution infiltrates into the electrode assembly 52. The number of the electrode assembly 52 included in the battery cell 5 may be one or more, and those skilled in the art can select the number according to specific and actual requirements.

In some embodiments, the battery may be assembled into a battery module. The number of batteries included in the battery module may be one or more, and the specific number may be selected by those skilled in the art based on the use and capacity of the battery module.

FIG. 5 shows a battery module 4 as one example. Referring to FIG. 5, in the battery module 4, a plurality of battery cells 5 may be sequentially disposed in the length direction of the battery module 4. Certainly, the arrangement may also be in any other manner. Further, the plurality of battery cells 5 may be fixed by fasteners.

Optionally, the battery module 4 may further include a shell having an accommodating space in which the plurality of battery cells 5 are accommodated.

In some embodiments, the battery module described above may also be assembled into a battery pack. The number of battery modules included in the battery pack may be one or more, and the specific number may be selected by those skilled in the art based on the use and capacity of the battery pack.

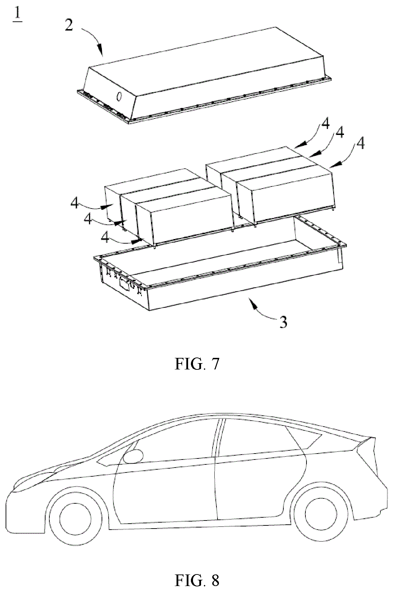

FIGs. 6 and 7 show a battery pack 1 as one example. Referring to FIGs. 6 and 7, the battery pack 1 may include a battery case and a plurality of battery modules 4 disposed in the battery case. The battery case includes an upper case body 2 and a lower case body 3. The upper case body 2 is capable of lidding the lower case body 3 to form a closed space for accommodating the battery modules 4. The plurality of battery modules 4 may be arranged in any manner in the battery case.

In a fourth aspect of the present application, the present application provides an electric device. The electric device includes the above battery. Therefore, the electric device has all the features and advantages of the above battery, which will not be repeated herein.

The electric device includes at least one of the battery, the battery module, or the battery pack provided in the present application. The battery, the battery module, or the battery pack can be used as a power source for the electric device, and they can also be used as an energy storage unit for the electric device. The electric device may include, but is not limited to, a mobile device (e.g., a mobile phone or a laptop computer), an electric vehicle (referring to FIG. 8, e.g., a pure electric vehicle, a hybrid electric vehicle, a plug-in hybrid electric vehicle, an electric bicycle, an electric scooter, an electric golf cart, or an electric truck), an electric train, a ship, or a satellite, an energy storage system, or the like.

As for the electric device, a battery, a battery module, or a battery pack may be selected according to usage requirements thereof.

The solutions of the present application are described below through specific examples. It should be noted that the following examples are only used to illustrate the present application and should not be construed as limiting the scope of the present application. The examples without techniques or conditions specified therein are implemented according to techniques or conditions described in the literature in the art or according to product instructions. Reagents or instruments used herein without specified manufacturers are all commercially available conventional products.

### Example 1

### 1. Preparation of polymer

### (1) Preparation of polymer emulsion

A first monomer methyl acrylate, a second monomer methacrylic acid, and a third monomer acrylamide were weighed in a mass ratio of the first monomer to the second monomer to the third monomer being 80:5:15, and the monomers were mixed uniformly. 1000 g of the monomer mixture, 30 g of an emulsifier sodium dodecyl sulfate, 10 g of an initiator ammonium persulfate, and 1200 g of deionized water were added into a 5 L four-neck flask provided with a mechanical stirrer, a thermometer, and a condensing pipe, and the mixture was stirred at a high speed for emulsification for 30 min. In a nitrogen atmosphere, the mixture was heated to 75 °C for reaction for 4 h, cooled to a temperature below 40 °C, adjusted to a neutral pH, filtered, and discharged, so as to obtain the polymer emulsion.

(2) The polymer emulsion was subjected to a spray drying process to prepare the binder for the separator, where the conditions of the spray drying process were as follows: the air inlet temperature was 110 °C, the air outlet temperature was 50 °C, and the air pressure was 0.5 kPa.

### 2. Preparation of battery:

### (1) Preparation of separator

A commercially available PE microporous thin film (from Dongguan Advanced Electronic Technology Co., Ltd.) having a thickness of 7 µm and an average pore size of 80 nm was used as a base film. The polymer prepared above was stirred in deionized water and mixed uniformly to obtain a slurry (the solid content was 20%). The slurry was sprayed on both surfaces of the base film, the base film was dried to remove the solvent, and the application density of the polymer on the base film was 1.5 g/m², so as to obtain the separator.

### (2) Preparation of positive electrode plate

Polyvinylidene fluoride (PVDF), NCM811, a conductive agent carbon black, and N-methylpyrrolidone (NMP) were fully stirred and mixed uniformly in a mass ratio of 1.2:58.38:0.42:40 to prepare a positive electrode slurry. The positive electrode slurry was uniformly applied to a positive electrode current collector aluminum foil at a loading capacity of 200 g/m², and the aluminum foil was then subjected to drying, cold pressing, and slitting to obtain the positive electrode plate.

### (3) Preparation of negative electrode plate

Artificial graphite, a conductive agent acetylene black, a binder styrene-butadiene rubber (SBR), and a thickener sodium carboxymethylcellulose (CMC-Na) were added into deionized water in a mass ratio of 96.2:1.0:1.6:1.2, and the mixture was fully stirred and mixed uniformly to prepare a negative electrode slurry (the solid content was 63%). The negative electrode slurry was applied to a negative electrode current collector copper foil at a loading capacity of 98 g/m², and the copper foil was then subjected to drying, cold pressing, and slitting to obtain the negative electrode plate.

### (4) Preparation of electrolytic solution

Ethylene carbonate (EC), ethyl methyl carbonate (EMC), and diethyl carbonate (DEC) were mixed in a volume ratio of 1:1:1 at 25 °C to obtain a mixed solvent, and then LiPF₆ was dissolved in the above mixed solvent to obtain the electrolytic solution, where the concentration of LiPF₆ was 1 mol/L.

### (5) Assembly of battery

The positive electrode plate, the separator, and the negative electrode plate described above were stacked in sequence and wound, and were subjected to cold pressing molding (the separator was bound to the electrode plate in the process) to obtain a bare cell. The bare cell was put into an outer packaging, and the electrolytic solution prepared above was added. After undergoing processes such as packaging, standing, formation, and aging, the battery was obtained.

Examples 2 to 9 and Comparative Examples 1 to 2 differ from Example 1 in that reference is made to Table 1.

**Table 1**

| No. | First monomer | Second monomer | Third monomer | Mass ratio of first monomer to second monomer to third monomer |
|---|---|---|---|---|
| Example 1 | Methyl acrylate | Methacrylic acid | Acrylamide | 100:6.25:18.75 |

| Example 2 | Butyl acrylate | Acrylic acid | N-hydroxymethyl acrylamide | 100:6.25:18.75 |
|---|---|---|---|---|
| Example 3 | Methyl acrylate | Methacrylic acid | Acrylamide | 100:50:10 |
| Example 4 | Methyl acrylate | Methacrylic acid | Acrylamide | 100:1:40 |
| Example 5 | Methyl acrylate | Methacrylic acid | N-hydroxymethyl acrylamide | 100:3.25:21.75 |
| Example 6 | Methyl acrylate | Methacrylic acid | N-hydroxymethyl acrylamide | 100:6.25:18.75 |
| Example 7 | Glycidyl methacrylate | Methacrylic acid | Acrylamide | 100:6.25:18.75 |
| Example 8 | 2-Phenoxyethyl acrylate | Methacrylic acid | Acrylamide | 100:6.25:18.75 |
| Example 9 | Glycidyl methacrylate | Methacrylic acid | Perfluorooctyl methacrylate | 100:6.25:18.75 |
| Comparative Example 1 | Lauryl acrylate | Methacrylic acid | Acrylamide | 100:3.25:21.75 |
| Comparative Example 2 | Methyl methacrylate | Methacrylic acid | Acetone acrylate amide, adipic acid dihydrazide (mass ratio of 1:1) | 100:1:40 |

The polymers in the above examples and comparative examples were subjected to the following tests, and the test results are shown in Table 2.

Loss modulus: A polymer emulsion was prepared into an aqueous solution with a solid content of 50%, and the solution was allowed to stand on a culture dish at 25 °C for 24 hours to form an adhesive film having a thickness of 1 mm; (2) the prepared adhesive film was placed on an Anton Paar device (MCR302); (3) a rotor having a diameter of 8 mm was used to press the adhesive film from above; (4) the pressure was set to 1.0 N; and (5) the temperature was raised at a rate of 1 °C per minute, and the test was performed at a frequency of 1 Hz. The loss modulus of the polymer at 10 °C and 25 °C can be obtained by recording the values at 10 °C and 25 °C from -25 °C to 50 °C.

Degree of crosslinking: (1) 6 g of polymer particles were weighed by using two stacked layers of weighing paper (a weighing balance used was a Uni Bloc SHIMADZU AUY220 balance with a readability of 0.1 mg); (2) the weighed polymer particles were dried in a vacuum oven (the vacuum oven used was an LDZF-6090 vacuum oven from LIKCTR, with a size of 450 × 450 × 450, RT to 250 °C) at 105 °C for 6 h; (3) two layers of medium-speed filter paper (the medium-speed filter paper used was the quantitative medium-speed filter paper from NEWSTAR) were stacked and numbered and dried in the vacuum oven (the vacuum oven used was the LDZF-6090 vacuum oven from LIKCTR, with a size of 450 × 450 × 450, RT to 250 °C) at 105 °C for 6 h; (4) the polymer particles and the weighing paper were taken out from the vacuum oven and then immediately sealed with a sealing bag to prevent water absorption; (5) the medium-speed filter paper was taken out from the vacuum oven and then immediately loaded into a resealable bag for weighing, and the total weight m₁ of the medium-speed filter paper and the resealable bag was recorded, the weight value being rounded to four decimal places; (6) the polymer particles obtained in step (4) were poured into a small crusher (the crusher used was an LG-01 crusher from Baixin, with a power of 350 W, a fineness of 30 meshes to 300 meshes, a rotation speed of 2500 r/m, and a crushing amount of 500 g/m), and then the cover was closed and screwed; (7) the power supply was plugged in, a power switch was turned on, and the power switch was turned off after counting for 30 s with a stopwatch; (8) the crusher was allowed to stand for 5 min, and after the powder in the crusher had settled, the cover of the crusher was unscrewed, the sample being in a uniform powder state; (9) the crushed sample was transferred to the resealable bag with a brush and immediately sealed; (10) a centrifuge tube and a centrifuge tube cover were tared on the balance, the sample bag was taken out from the drying dish, then about 2 ± 0.2 g of the sample was poured into the centrifuge tube, the centrifuge tube cover was immediately closed, and the actual weight m₂ of the sample was weighed; (11) 50 mL of dimethyl carbonate (DMC) was added according to the scale on the 50 mL centrifuge tube; (12) the centrifuge tube was transferred to an oven (the oven used was a GZX-9146MBE oven from Boxun, with a capacity of 129 L, RT+5 °C to 300 °C) and held at 60 °C for 12 h; (13) after the centrifuge tube was taken out from the oven, the sample was poured onto the medium-speed filter paper, then the solution was filtered, and the filter residue was retained; (14) the centrifuge tube was rinsed with a large amount of DMC solution to prevent the sample from remaining in the centrifuge tube; (15) the filter residue was dried in the oven at 105 °C for 2 h; (16) after the sample baking was completed, the sample was loaded into the corresponding resealable bag for weighing; and (17) the balance was reset to zero to weigh the total mass of the filter residue, the medium-speed filter paper, and the resealable bag, and the mass m₃ was recorded; and the degree of crosslinking a of the obtained polymer particles was calculated according to Degree of crosslinking = $\frac{1 - \frac{m 2 - \left(m3-m1\right)}{m 2}}{2} \times 100 %$.

Degree of mass swelling: (1) Dissolution: 10 g of the polymer particle powder and 90 g of N-methylpyrrolidone (NMP) were mixed and stirred at 40 °C for 7 h; (2) Preparation of an adhesive film: The stirred polymer particle powder adhesive solution was placed in a 250 mL beaker and baked at 70 °C for 8 days to obtain a dry adhesive film; and (3) Swelling rate test: About 3 g of the dry adhesive film having a thickness of 2 mm was taken, and its accurate mass was weighed and recorded as M₁. The dry adhesive film was immersed in an electrolytic solution (a mass ratio of ethylene carbonate (EC) to ethyl methyl carbonate (EMC) to diethyl carbonate (DEC) in an electrolyte solvent was 3:5:2, and the electrolyte solvent and lithium hexafluorophosphate (LiPF₆) were mixed to prepare a 1 mol/L electrolytic solution), and the solution was baked in an oven at 70 °C for 24 h. After taking out the sample and allowing it to stand for 1 h, the sample was wiped clean, and its mass M₂ was weighed. The degree of mass swelling b of the polymer particles was calculated according to $Degree of mass swelling = \frac{M 2 - M 1}{M 1} \times 100 %$.

**Table 2**

| No. | Degree of crosslinking a/% | Degree of mass swelling at 70 °C b/% | a/b | Loss Modulus at 25 °C/10⁵ Pa | Loss Modulus at 10 °C/10⁵ Pa |
|---|---|---|---|---|---|
| Example 1 | 70 | 70 | 1.00 | 600 | 750 |
| Example 2 | 85 | 60 | 1.42 | 500 | 800 |
| Example 3 | 80 | 50 | 1.60 | 900 | 1000 |
| Example 4 | 75 | 75 | 1.00 | 300 | 600 |
| Example 5 | 85 | 45 | 1.89 | 1000 | 1200 |
| Example 6 | 90 | 43 | 2.09 | 1200 | 1400 |
| Example 7 | 88 | 60 | 1.47 | 800 | 900 |
| Example 8 | 80 | 56 | 1.43 | 900 | 1100 |
| Example 9 | 75 | 36 | 2.08 | 700 | 1000 |
| Comparative Example 1 | 80 | 120 | 0.67 | 60 | 40 |
| Comparative Example 2 | 95 | 30 | 3.17 | 8000 | 10000 |

The batteries in the above examples and comparative examples were subjected to the following tests, and the test results are shown in Table 3.

### 1. Low-temperature adhesive property:

(1) The prepared separator having a length of 300 mm × a width of 100 mm, as well as the positive electrode plate and the negative electrode plate prepared above were selected.
(2) The upper and lower surfaces of the separator were wrapped with paper, and punched into a sample of 54.2 mm × 72.5 mm by using a knife die and a punching machine.
(3) The punched separator sample and the positive electrode plate were neatly stacked, and Teflon sheets having a size of 130 mm × 130 mm were placed on the upper and lower surfaces. The stacked sample was then placed in the middle of a cardboard of 200 mm × 200 mm, and covered with another cardboard of 150 mm × 160 mm.
(4) The stacked sample was placed in a flat press and the pressure was adjusted, and the air pressure was adjusted for pressing, where the pressure of the flat press = 3500 KG ± 10 KG (the contact area was about 50 mm × 100 mm, and the actual pressure after conversion was about 7 MPa), T = 25 °C, and the time was set to 10 s.
(5) The hot-pressed sample was punched into small strips of 72.5 mm × 15 mm by using the knife die and the punching machine.
(6) One surface of the positive electrode plate was adhered to a steel plate by a double-sided adhesive tape for fixation, the other surface was adhered to the separator, and an A4 paper strip having a width of 15 mm was adhered to the separator by the double-sided adhesive tape, to complete the preparation of the test sample.
(7) A tensile machine from Gotech was turned on, and the parameters were set as follows in sequence: adhesive force test, speed of 50 mm/min, and initial clamping fixture spacing of 40 mm.
(8) The test sample was placed between the clamping fixtures, the end of the steel plate was fixed on a lower chuck, and the A4 paper was fixed on an upper chuck. The upper and lower chucks were each securely clamped by a clamping fixture.
(9) The stretching operation interface of the computer desktop was clicked to reset the force, displacement, and the like to zero, and then the "start" was clicked to perform pre-stretching by about 5 mm. After the pre-stretching, the force, displacement, and the like were reset to zero again to start the test. During the test, the steel plate for fixing the electrode plate was fixed, and the A4 paper strip was pulled upward by the tensile machine to separate the separator from the positive electrode plate. After the test was completed, the complete data was exported and saved.
(10) At least five test samples were measured for each group, and if the curve repeatability of the adhesive force test of the five test samples was good, the next group of tests was performed. Otherwise, the test needed to be performed again until the five test samples had good repeatability.
(11) After the test was completed, an adhesive strength (N/m)-displacement curve was made. The average value of the 100th data point to the 300th data point was taken as the adhesive force, and the measured adhesive force was recorded as F₁.

### 2. Capacity retention rate at 25 °C:

At 25 °C, the battery was fixed by using three steel clamping fixtures, and a unilateral heat insulation pad of 1 mm was provided between the fixture and the battery. A preloading force of 0.1 MPa was applied, and then the battery was charged at a constant current of 1C to a charging cut-off voltage of 3.65 V, then charged at a constant voltage to the current ≤ 0.05C, and allowed to stand for 5 min. Then, the battery was discharged at a constant current of 0.33C to a discharging cut-off voltage of 2.8 V, and allowed to stand for 5 min, and the battery capacity C₀ at this time was recorded. The battery was charged and discharged for 1500 cycles based on the method, and the battery capacity after 1500 cycles was recorded as C₁.$Cycle capacity retention rate of battery at {25}^{∘} C = {C}_{1} {/ C}_{0} \times 100 %$

### 3. Low-temperature three-electrode lithium plating window:

The sample preparation steps include: (1) An unrolled bare cell was taken, and three or more copper wires were placed at the middle position of the outer second layer of the negative electrode plate corresponding to the separator, and fixed at the upper edge of the anode electrode plate with an adhesive tape; (2) a small piece of separator was applied on the copper wires to ensure that the copper wires were covered and not in contact with each other, and the separator was fixed with the adhesive tape; if the cell was a four-electrode cell, one or more copper wires (SE) needed to be not covered by the separator and were marked to distinguish from the remaining copper wires; (3) the bare cell was rewound while being careful not to displace the copper wires, and the sizes of the negative electrode plate in the length and width directions were maintained to be greater than those of the positive electrode plate; and (4) the rolling process was continued, the cold pressing was first performed (25 °C, 3 MPa, 10 s), and then the hot pressing was performed (55 °C, 5 MPa, 15 s), to obtain the cell to be tested.

The test steps include a capacity test and a continuous charging window test. The capacity test includes: (1) The cell to be tested was allowed to stand for 30 min; (2) the cell to be tested was charged at a direct current of 0.33C to 2.8 V; (3) the cell to be tested was allowed to stand for 5 min; (4) the cell to be tested was charged at a constant current of 0.33C to 4.35 V, and then charged at a constant voltage until the current ≤ 0.05C; (5) the cell to be tested was allowed to stand for 5 min; (6) the cell to be tested was discharged at a direct current of 0.33C to 2.8 V, and the battery capacity Cₙ was recorded; and (7) the cell to be tested was allowed to stand for 5 min. In the entire capacity test process, the test temperature was 25 °C, and the test sampling interval was 10 S/mA/mV.

The continuous charging window test includes: (1) The cell to be tested was allowed to stand for 30 min; (2) the cell to be tested was charged at a direct current of 0.33C to 2.8 V; (3) the current supply was stopped, and the cell to be tested was placed at -10 °C; (4) the cell to be tested was allowed to stand for 2 h; and (5) the cell to be tested was charged at different rates to 4.35 V, the capacity C₁ before the jump (the jump point indicated that the negative electrode potential reached -10 mV or the voltage reached 4.35 V) was read, and the test at the next rate was performed. The test rate sequentially included the following: 0.08C, 0.1C, 0.2C, 0.4C, 0.6C, 0.8C, 1C, 1.5C, 2C, and 3C. C₁/Cₙ was the SOC at the time of jump, and a rate-SOC curve at the temperature was obtained by taking the SOC as the X axis and the rate as the Y axis. The corresponding charging rates at 5% SOC and 50% SOC can be obtained through the rate-SOC curve, and C₁ corresponding to the corresponding SOC is the rate without lithium plating at the temperature. In the continuous charging window test, the test temperature of steps (1) and (2) was 25 °C, and the test sampling interval was 60 S/mA/mV; the test temperature of steps (3) and (4) was -10 °C, and the test sampling interval was 60 S/mA/mV; and the test temperature of step (5) was - 10 °C, and the test sampling interval was 10 S/mA/mV.

**Table 3**

| No. | Adhesive force at room temperature F₁/N (for positive electrode plate) | Capacity retention rate after 1500 cycles at 25 °C/% | Low-temperature three-electrode lithium plating window at -10 °C, 5% SOC/C | Low-temperature three-electrode lithium plating window at -10 °C, 50% SOC/C |
|---|---|---|---|---|
| Example 1 | 0.8 | 82 | 0.5 | 0.2 |
| Example 2 | 1.0 | 83 | 0.45 | 0.16 |
| Example 3 | 0.75 | 80 | 0.4 | 0.15 |
| Example 4 | 0.6 | 78 | 0.50 | 0.23 |
| Example 5 | 0.78 | 80 | 0.42 | 0.2 |
| Example 6 | 0.5 | 78 | 0.45 | 0.18 |
| Example 7 | 0.8 | 82 | 0.5 | 0.3 |
| Example 8 | 0.6 | 83 | 0.6 | 0.34 |
| Example 9 | 0.45 | 77 | 0.42 | 0.21 |
| Comparative Example 1 | 0.35 | 65 | 0.12 | 0.08 |
| Comparative Example 2 | 0.12 | 68 | 0.2 | 0.10 |

The test results show that the loss modulus of the polymer in Comparative Example 1 at 10 °C is less than 5 × 10⁶ Pa, resulting in excessive swelling of the polymer. The degree of mass swelling of the polymer at 70 °C is 120%, which deteriorates the adhesive effect of the battery and causes excessive consumption of the electrolytic solution, resulting in a decrease in the cycle performance of the battery. The loss modulus of the polymer in Comparative Example 2 at 10 °C is greater than 9 × 10⁸ Pa, resulting in a deteriorated adhesive effect of the separator at a low temperature, the separation of the electrode plate from the separator, and a significant decrease in the cycle performance of the battery.

It should be noted that the present application is not limited to the embodiments described above. The embodiments described above are merely examples, and any embodiments having a structure substantially identical to the technical concept and exerting the same functional effects within the scope of the technical solutions of the present application are all included within the technical scope of the present application. Furthermore, without departing from the spirit of the present application, various modifications that can be conceived by those skilled in the art to the embodiments, as well as other embodiments formed by combining some of the constituent elements of the embodiments, are also included within the scope of the present application.

## Claims

1. A separator, comprising a base film and an adhesive layer at least located on one side of the base film, wherein the adhesive layer comprises a polymer, and a loss modulus of the polymer at 10 °C is 5 × 10⁶ Pa to 9 × 10⁸ Pa.

2. The separator according to claim 1, wherein a degree of crosslinking of the polymer is a, and a ≥ 75%.

3. The separator according to claim 1 or 2, wherein a degree of mass swelling of the polymer at 70 °C is b, and 36% ≤ b ≤ 75%.

4. The separator according to claim 3, wherein 80% ≤ a ≤ 90%, and 43% ≤ b ≤ 60%.

5. The separator according to any one of claims 1 to 4, wherein a loss modulus of the polymer at 25 °C is 1 × 10⁶ Pa to 9 × 10⁷ Pa.

6. The separator according to any one of claims 1 to 5, wherein a monomer of the polymer and derivatives of the monomer of the polymer comprise at least a first monomer, and a structure of the first monomer is shown in formula 1: 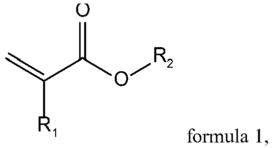 wherein R₁ comprises a hydrogen atom or a C₁-C₄ alkyl group, and R₂ comprises one of a substituted or unsubstituted C₁-C₄ alkyl group, a substituted or unsubstituted C₃-C₄ isobornyl group, a -CH₂(CH ₂)ₙ₁-O-phenyl ring, and a -CH₂(CH₂)ₙ₂-O epoxy group, wherein a substituent of the substituted C₁-C₄ alkyl group comprises a hydroxy group or a C₁-C₆ alkyl group, and the n1 and the n2 are each independently 1 to 3.

7. The separator according to claim 6, wherein the first monomer comprises at least one of ethyl acrylate, n-butyl acrylate, n-propyl acrylate, isobutyl acrylate, sec-butyl acrylate, tert-butyl acrylate, cyclohexyl acrylate, isooctyl acrylate, lauryl acrylate, 2-ethylhexyl acrylate, methyl acrylate, methyl methacrylate, ethyl methacrylate, n-butyl methacrylate, 2-ethylhexyl methacrylate, isobornyl methacrylate, lauryl methacrylate, vinyl acetate, trimethylolpropane triacrylate, 2-hydroxyethyl acrylate, 2-hydroxypropyl acrylate, 2-hydroxyethyl methacrylate, 2-hydroxypropyl methacrylate, glycidyl methacrylate, and 2-phenoxyethyl acrylate.

8. The separator according to any one of claims 1 to 7, wherein the monomer of the polymer and the derivatives of the monomer of the polymer further comprise a second monomer, and a structure of the second monomer is shown in formula 2 and/or formula 3: 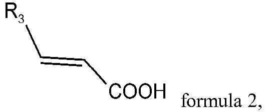 and/or, 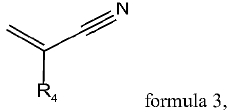 wherein R₃ comprises a hydrogen atom or a C₁-C₈ alkyl group, and R₄ comprises a hydrogen atom or a C₁-C₈ alkyl group.

9. The separator according to claim 8, wherein the second monomer comprises at least one of acrylonitrile, methacrylonitrile, ethacrylonitrile, acrylic acid, methacrylic acid, crotonic acid, and heptenoic acid.

10. The separator according to any one of claims 1 to 9, wherein the monomer of the polymer and the derivatives of the monomer of the polymer further comprise a third monomer, and a structure of the third monomer is shown in formula 4: 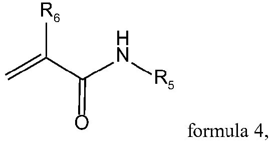 wherein R₅ comprises a hydrogen atom, a hydroxyl-substituted C₁-C₆ alkyl group, or a C₁-C₆ alkoxy group, and R₆ comprises a hydrogen atom or a C₁-C₆ alkyl group.

11. The separator according to claim 10, wherein the third monomer comprises at least one of acrylamide, N-hydroxymethyl acrylamide, and N-butoxymethylacrylamide.

12. The separator according to any one of claims 1 to 11, wherein the base film comprises at least one of polyethylene, polypropylene, polyvinylidene fluoride, polytetrafluoroethylene, polyethylene terephthalate, polybutylene terephthalate, polyacetal, polyamide, polycarbonate, polyimide, polyetheretherketone, polyaryletherketone, polyetherimide, polyamideimide, polybenzimidazole, polyether sulfone, polyphenylene oxide, cycloolefin copolymer, polyphenylene sulfide, and polyethylene naphthalene.

13. The separator according to any one of claims 1 to 12, wherein the loss modulus of the polymer at 10 °C is 6 × 10⁷ Pa to 1.4 × 10⁸ Pa.

14. A method for preparing the separator according to any one of claims 1 to 13, comprising:
disposing the polymer on at least one side of the base film to form the adhesive layer, so as to obtain the separator.

15. The method according to claim 14, wherein providing the polymer comprises:
blending and stirring constituent monomers of a polymer, an emulsifier, and an initiator in a molar ratio of 100:(2-10):(0.2-1), and heating the mixture for reaction to obtain a polymer emulsion; and
subjecting the polymer emulsion to spray drying to obtain the polymer.

16. The method according to claim 14 or 15, wherein the constituent monomers of the polymer comprise the first monomer, the second monomer, and the third monomer, wherein a mass ratio of the first monomer to the second monomer to the third monomer is 100:(1-50):(10-40).

17. A battery, comprising the separator according to any one of claims 1 to 13, and/or the separator obtained by using the method according to any one of claims 14 to 16.

18. The battery according to claim 17, wherein the battery is a lithium-ion battery, and a lithium plating window of the battery at 10 °C is 0.7C to 1.5C.

19. An electric device, comprising the battery according to claim 17 or 18.
